# EUROPEAN PATENT APPLICATION

(11) **EP 4 757 008 A1**
(43) Date of publication of application: **10.06.2026**
(21) Application number: 25220322.9
(22) Date of filing: 03.12.2025
(51) Int. Cl.: H01M 50/102, H01M 50/55, H01M 50/627, H01M 50/645

(54) **SECONDARY BATTERY AND METHOD FOR MANUFACTURING SAME**

(30) Priority: 05.12.2024 KR 20240179729
(71) Applicant: SAMSUNG SDI CO., LTD., Yongin-si, Gyeonggi-do 17084 (KR)
(72) Inventor: Oh, Eunseok, 17084 Yongin-si, Gyeonggi-do (KR); Jeoung, Seokyo, 17084 Yongin-si, Gyeonggi-do (KR); Jang, Hanbyeol, 17084 Yongin-si, Gyeonggi-do (KR); Yun, Jaehyeon, 17084 Yongin-si, Gyeonggi-do (KR)
(74) Representative: Meissner Bolte Partnerschaft mbB

(57) **Abstract**

A secondary battery (100, 200, 300, 400, 500) and a method for manufacturing the same are disclosed. The secondary battery (100, 200, 300, 400, 500) includes an electrode assembly (130, 230, 330, 430, 530), a case body (110, 310, 510) having an open first side surface accommodating the electrode assembly (130, 230, 330, 430, 530) and an electrolyte solution, and a case cover (120) attached to the first side surface of the case body (110, 310, 510), the case body (110, 310, 510) includes an injection port (113, 213, 313, 413, 513) on a second side surface (110a, 310a) different from the first side surface for receiving the electrolyte solution, and a discharge port (114, 221) is on a third side surface (110b, 310b) opposite to the second side surface (110a, 310a) and discharges at least a part of the electrolyte solution injected into the injection port (113, 213, 313, 413, 513) to an outside.

## Description

### BACKGROUND

### 1. Field

The present invention relates to a secondary battery and a method for manufacturing the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

During the manufacturing process of a secondary battery, after the electrode assembly is accommodated in the case, an electrolyte solution may be injected through an injection hole formed in the case. The electrode assembly may be arranged closely or tightly inside the case, so that the passage through which the injected electrolyte solution may pass is narrow. It may therefore take a long time to fill the electrolyte solution. Such a delay may be undesirable. Additionally, the electrolyte solution may be filled unevenly depending on the location where he electrode assembly is arranged closely tightly to the case, which may also be undesirable.

The above information disclosed in this Background section is for enhancement of understanding of the background of the present invention, and therefore, it may contain information that does not constitute related (or prior) art.

### SUMMARY

The present invention relates to a secondary battery and a method for manufacturing the same.

These and other aspects and features of the present invention will be described in or will be apparent from the following description of embodiments of the present invention.

According to the present invention, a secondary battery includes an electrode assembly, a case body having an open first side surface accommodating the electrode assembly and an electrolyte solution, and a case cover attached to the first side surface of the case body, the case body includes an injection port on a second side surface different from the first side surface for receiving the electrolyte solution, and a discharge port on a third side surface opposite to the second side surface configured to discharge at least a part of the electrolyte solution injected into the injection port to an outside.

In some embodiments, the discharge port may be in the case body in a diagonal direction from the injection port, with the electrode assembly interposed therebetween.

In some embodiments, the secondary battery may further include an electrode terminal on the second side surface and electrically connected to an electrode tab of the electrode assembly.

In some embodiments, the secondary battery may further include a first electrode terminal on the second side surface and electrically connected to a first electrode tab of the electrode assembly, and a second electrode terminal arranged between the first electrode terminal and the injection port on the second side surface and electrically connected to a second electrode tab of the electrode assembly.

In some embodiments, the secondary battery may further include a first electrode terminal on the second side surface and electrically connected to a first electrode tab of the electrode assembly, and a second electrode terminal on the second side surface and electrically connected to a second electrode tab of the electrode assembly, the injection port may be formed between the first electrode terminal and the second electrode terminal.

In some embodiments, the discharge port may include a plurality of discharge ports spaced apart from the third side surface by a set distance.

In some embodiments, the secondary battery may further include a first sealing member configured to seal the injection port, and a second sealing member configured to seal the discharge port.

In some embodiments, the case body may include a first main body portion extending in a first direction, and a second main body portion extending in a second direction perpendicular to the first direction from a first end of the first main body portion, the injection port may be on an upper surface of the first main body portion, and the discharge port may be on a lower surface of the second main body, which faces the first main body portion.

In some embodiments, the secondary battery may further include an electrode terminal on a side surface of a second end arranged in a direction perpendicular to the upper surface of the first main body portion, and electrically connected to an electrode tab of the electrode assembly.

In some embodiments, the first main body portion may further include an auxiliary discharge port formed diagonally from the injection port on the lower surface opposite to the upper surface.

In some embodiments, the case body may include a first main body portion, and a second main body portion extended in a width direction from the lower portion of the first main body portion, the injection port may be on an upper surface of the first main body portion, and the discharge port may be on a lower surface of the second main body portion.

In some embodiments, the case body may be in a shape of an arc with a curved side surface, the injection port may be on an upper surface of one end of the case body, and the discharge port may be on a lower surface of a second end of the case body.

According to the present invention, a method for manufacturing a secondary battery includes accommodating an electrode assembly in a case body including an open first side surface, an injection port on a second side surface that is different from the first side surface, and a discharge port on a third side surface opposite to the second side surface, coupling a case cover with the first side surface of the case body, installing a back pressure device at the discharge port, supplying the electrolyte solution to the injection port while operating the back pressure device to apply back pressure to the discharge port, and sealing the injection port and the discharge port.

In some embodiments, the supplying of the electrolyte solution may include first supplying the electrolyte solution to the injection port while applying back pressure to the discharge port, and secondarily supplying the electrolyte solution to the injection port while applying back pressure to the discharge port.

In some embodiments, the supplying of the electrolyte solution may include calculating an amount of the electrolyte solution sucked into the back pressure device after secondarily supplying the electrolyte solution, and additionally supplying an amount of electrolyte solution corresponding to the calculated amount of the electrolyte solution through the injection port.

In some embodiments, the supplying of the electrolyte solution may include precharging the electrode assembly after primarily supplying the electrolyte solution.

In some embodiments, the supplying of the electrolyte solution may include discharging gas generated inside the case body to an outside after precharging the electrode assembly.

In some embodiments, the sealing of the injection port and the discharge port may include inserting and coupling a first sealing member to the injection port, separating the back pressure device from the discharge port, and inserting and coupling a second sealing member to the discharge port.

In some embodiments, the sealing of the injection port and the discharge port may include inserting and coupling a first sealing member to the injection port, inserting a second sealing member into the discharge port through a sealing member installation device equipped in the back pressure device, separating the back pressure device from the discharge port, and coupling the second sealing member to the discharge port.

In some embodiments, the back pressure device may be provided inside the chamber, and the method may further include vacuum-evacuating an interior of the chamber before supplying the electrolyte solution, and breaking a vacuum of the interior of the chamber after supplying the electrolyte solution to the injection port.

According to some embodiments of the present invention, an injection port for injecting an electrolyte solution and a discharge port for discharging an electrolyte solution are formed in a case of a secondary battery, and the electrolyte solution is injected into the injection port while applying back pressure to the discharge port, so that the electrolyte solution may be filled more quickly and evenly.

According to some embodiments of the present invention, by using a back pressure device in the process of injecting electrolyte solution into a case of a secondary battery, the electrolyte solution may be effectively injected through an injection port of the case, and the electrolyte solution discharged through the discharge port may be recycled.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings:
FIG. 1 is a cross-sectional view showing an example of a secondary battery according to one embodiment of the present invention.
FIG. 2 is an exploded perspective view of the secondary battery of FIG. 1 according to one embodiment of the present invention..
FIG. 3 is a cross-sectional view of the secondary battery of FIG. 1 showing an example of supplying an electrolyte solution to the secondary battery according to one embodiment of the present invention.
FIG. 4 is a cross-sectional view of the secondary battery of FIG. 1 showing an example of dispersing an electrolyte solution supplied to the secondary battery according to one embodiment of the present invention.
FIG. 5 is a cross-sectional view showing an example of a secondary battery according to one embodiment of the present invention.
FIG. 6 is another cross-sectional view showing an example of a secondary battery according to one embodiment of the present invention.
FIG. 7 is a cross-sectional view showing an example of a secondary battery according to one embodiment of the present invention.
FIG. 8 is a cross-sectional view showing an example of a secondary battery according to one embodiment of the present invention.
FIG. 9 is a cross-sectional view showing an example of a secondary battery according to one embodiment of the present invention.
FIG. 10 is a flowchart showing an example of a method for manufacturing a secondary battery according to some embodiments of the present invention.
FIG. 11 is a flowchart showing an example of a step of supplying an electrolyte solution in a method for manufacturing a secondary battery according to some embodiments of the present invention.
FIG. 12 is a cross sectional view of a back pressure device being installed in a secondary battery in a method for manufacturing a secondary battery according to some embodiments of the present invention.
FIG. 13 is a cross sectional view of a secondary battery being supplied with a first supply of an electrolyte solution in a method for manufacturing the secondary battery according to some embodiments of the present invention.
FIG. 14 is a cross sectional view of an electrode assembly being precharged in a method for manufacturing the secondary battery according to some embodiments of the present invention.
FIG. 15 is a cross sectional view of a secondary battery being supplied with a second supply of an electrolyte solution in a method for manufacturing the secondary battery according to some embodiments of the present invention.
FIG. 16 is a cross sectional view of a secondary battery and a back pressure device arranged in a chamber in a method for manufacturing a secondary battery according to some embodiments of the present invention.
FIG. 17 is a cross-sectional view of an injection portion receiving a first sealing member in a method for manufacturing a secondary battery according to some embodiments of the present invention.
FIG. 18 is a cross-sectional view of a discharge port receiving a second sealing member in a method for manufacturing a secondary battery according to some embodiments of the present invention.
FIGS. 19 to 22 are cross-sectional views of a sealing member installation device for inserting a second sealing member into a discharge port in a method for manufacturing a secondary battery according to some embodiments of the present invention.

### DETAILED DESCRIPTION

Hereinafter, embodiments of the present invention will be described, in detail, with reference to the accompanying drawings. The terms or words used in the present specification and claims are not to be limitedly interpreted as general or dictionary meanings and should be interpreted as meanings and concepts that are consistent with the technical idea of the present invention on the basis of the principle that an inventor can be his/her own lexicographer to appropriately define concepts of terms to describe his/her invention in the best way.

The embodiments described in this specification and the configurations shown in the drawings are only some of the embodiments of the present invention and do not represent all of the technical spirit, aspects, and features of the present invention. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

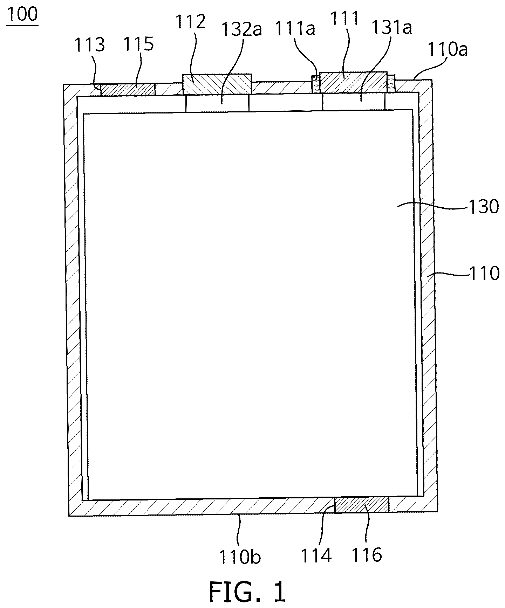

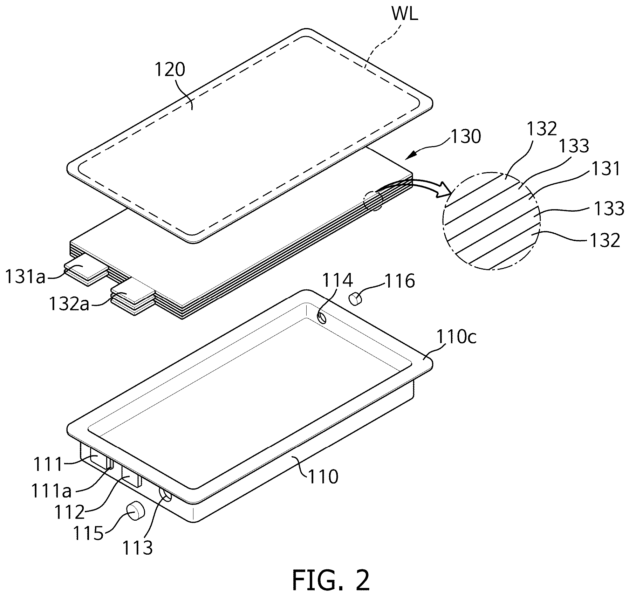

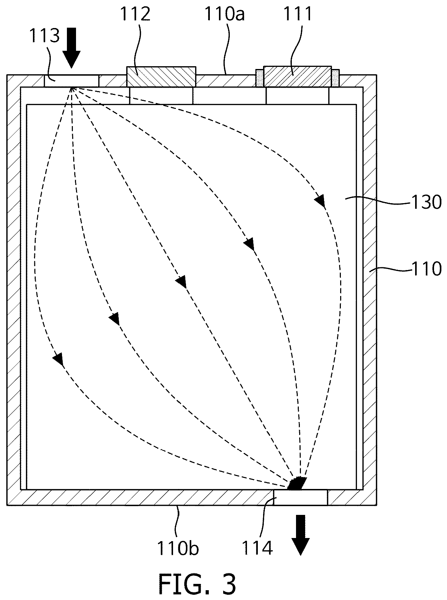

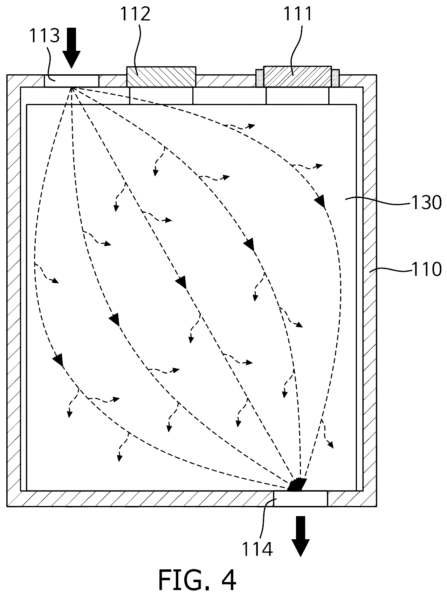

FIG. 1 is a cross-sectional view showing an example of a secondary battery according to one embodiment of the present invention. FIG. 2 is an exploded perspective view of the secondary battery of FIG. 1 according to one embodiment of the present invention FIG. 3 is a cross-sectional view of the secondary battery of FIG. 1 showing an example of supplying an electrolyte solution to the secondary battery according to one embodiment of the present invention. FIG. 4 is a cross-sectional view of the secondary battery of FIG. 1 showing an example of dispersing an electrolyte solution supplied to the secondary battery according to one embodiment of the present invention.

Referring to FIGS. 1 to 4, a secondary battery 100 according to one embodiment of the present invention may include an electrode assembly 130, a case body 110 having a first side surface that is open and in which the electrode assembly 130 and an electrolyte solution are accommodated, and a case cover 120 that seals the first side surface of the case body 110.

The electrode assembly 130 may be formed by winding or stacking a stack of a first electrode 131, a separator 133, and a second electrode 132, which are formed as thin plates or films. When the electrode assembly 130 is a wound stack, a winding axis may be parallel to the longitudinal direction of the case. In other embodiments, the electrode assembly 130 may be a stack type rather than a winding type, and the shape of the electrode assembly 130 is not limited in the present invention. In addition, the electrode assembly 130 may be a Z-stack electrode assembly 130 in which a positive electrode plate and a negative electrode plate are inserted into both sides of a separator 133, which is then bent into a Z-stack. In addition, one or more electrode assemblies may be stacked such that long sides of the electrode assemblies are adjacent to each other and accommodated in the case body 110, and the number of electrode assemblies in the case is not limited in the present invention. The first electrode 131 of the electrode assembly 130 may act as a negative electrode, and the second electrode 132 may act as a positive electrode. Of course, the reverse is also possible.

The first electrode 131 may be formed by applying a first electrode active material, such as graphite or carbon, to a first electrode current collector formed of a metal foil, such as copper, a copper alloy, nickel, or a nickel alloy. The first electrode 131 may include a first electrode tab 131a that is a region to which the first electrode active material is not applied. The first electrode tab 131a may act as a current flow path between the first electrode 131 and the first current collector. In some embodiments, when the first electrode 131 is manufactured, the first electrode tab 131a may be formed by being cut in advance to protrude to one side of the electrode assembly 130, or the first electrode tab 131a may protrude to one side of the electrode assembly 130 more than (e.g., farther than or beyond) the separator 133 without being separately cut.

The second electrode 132 may be formed by applying a second electrode active material, such as a transition metal oxide, on a second electrode current collector formed of a metal foil, such as aluminum or an aluminum alloy. The second electrode 132 may include a second electrode tab 132a that is a region to which the second electrode active material is not applied. The second electrode tab 132a may act as a current flow path between the second electrode 132 and the second current collector. In some embodiments, the second electrode tab 132a may be formed by being cut in advance to protrude to the other side (e.g., the opposite side) of the electrode assembly 130 when the second electrode 132 is manufactured, or the second electrode 132 may protrude to the other side of the electrode assembly 130 more than (e.g., farther than or beyond) the separator 133 without being separately cut.

The case body 110 may form the overall appearance of the secondary battery 100. The case body 110 may be formed of stainless use steel (SUS). In some embodiments, the case body 110 may be formed of a conductive metal such as aluminum, aluminum alloy, or nickel-plated steel.

The case body 110 may have a first side surface opened (or an open first side surface) so that an electrode assembly 130 may be accommodated. In this regard, the open first side surface may receive the electrode assembly 130. A case cover 120 may be attached to the first side surface of the case body 110 to thereby be sealed. In some embodiments, the case body 110 is provided with a flange portion 110c that extends outwardly along the perimeter of the first side surface, and a case cover 120 is arranged on the flange portion 110c and welded along a welding line WL to join the case body 110 and the case cover 120. In some embodiments, in order to improve the energy density of the secondary battery 100, after the case cover 120 is welded to the case body 110, the outer portion of the welding line WL may be cut and removed. The method and configuration of joining the case body 110 and the case cover 120 are not limited to this example.

Inside the case body 110, a first electrode terminal 111 and a second electrode terminal 112 may be spaced apart from each other on a second side surface 110a that is different from the first side surface. The first electrode terminal 111 may be joined and electrically connected to the first electrode tab 131a of the first electrode 131 of the electrode assembly 130. The second electrode terminal 112 may be joined and electrically connected to the second electrode tab 132a of the second electrode 132 of the electrode assembly 130.

The first electrode terminal 111 or the second electrode terminal 112 may be arranged to be electrically insulated from the case body 110. In some embodiments, when the case body 110 functions as a negative electrode and the first electrode terminal 111 functions as a positive electrode, an insulating member 111a may be further provided between the first electrode terminal 111 and the case body 110. With this configuration, the first electrode terminal 111 may function as a positive electrode while insulated from the case body 110, and the second electrode terminal 112 may function as a negative electrode while in contact with the case body 110. The second electrode terminal 112 may also be positioned to be electrically insulated from the case body 110.

The case body 110 may include an injection port 113 which is formed on a second side surface 110a and into which an electrolyte solution is injected, and a discharge port 114 which is formed on a third side surface 110b opposite the second side surface 110a and configured to discharge at least a part of the electrolyte solution injected into the injection port 113 to the outside (e.g., outside of the case body). An electrode assembly 130 is accommodated in the case body 110, and after the case cover 120 is sealed to the case body 110, an electrolyte solution may be injected into the interior of the case body 110 through the injection port 113. The electrolyte solution injected into the injection port 113 may flow inside the case, and a part of the electrolyte solution may be discharged through the discharge port 114.

In some embodiments, a discharge port is not formed in the case, the electrode assembly is arranged closely or tightly inside the case (e.g., with substantially no space between the electrode assembly and the inside of the case), and it may be difficult for the electrolyte solution to flow into the case, and it may be difficult to supply a large amount (e.g., an amount larger than a threshold amount) of electrolyte solution due to, for example, the pressure inside the case.

In some embodiments, by forming an injection port 113 and a discharge port 114 in the case body 110, the pressure of the injection port 113 and the discharge port 114 may become substantially equal to the atmospheric pressure, so that the electrolyte solution injected into the injection port 113 may flow more easily toward the discharge port 114.

In some embodiments, after connecting a back pressure device to the discharge port 114, back pressure may be applied to the discharge port 114. In this case, suction force is generated at the discharge port 114 so that the electrolyte solution injected into the injection port 113 may flow more quickly inside the case, allowing the electrolyte solution to be filled more quickly than it would be without the back pressure device.

Referring to FIG. 3, an injection port 113 may be formed on the left side of the second side surface 110a of the case body 110, a first electrode terminal 111 may be arranged on the right side, and a second electrode terminal 112 may be arranged between the first electrode terminal 111 and the injection port 113. The discharge port 114 may be formed diagonally from the injection port 113 with the electrode assembly 130 interposed therebetween. The discharge port 114 may be formed on the right side of the third side surface 110b opposite the second side surface 110a of the case body 110.

With this configuration, in a state that a back pressure device is connected to the discharge port 114 and back pressure is applied, if the electrolyte solution is injected into the injection port 113 formed on the left side of the second side surface 110a of the case body 110, the electrolyte solution may flow while forming a flow path from the upper left side to the lower right side of the electrode assembly 130.

Referring to FIG. 4, when an electrolyte solution (e.g., a large amount of electrolyte solution) is supplied through the injection port 113, the electrolyte solution may flow from the upper left to the lower right of the electrode assembly 130 and may also spread or be dispersed in other directions, so that the electrolyte solution may be supplied more uniformly to the electrode assembly 130.

In some embodiments, in order to reduce or prevent the injected electrolyte solution from leaking, a first sealing member 115 and a second sealing member 116 may be combined with respectively the injection port 113 and the discharge port 114 to seal the injection port 113 and the discharge port 114. The first sealing member 115 and the second sealing member 116 may be sealing pins.

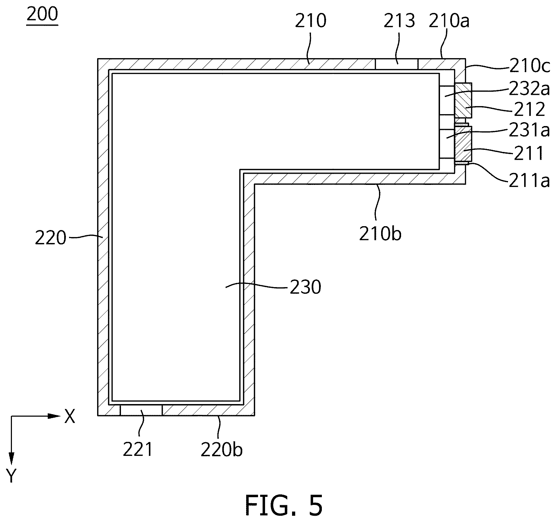

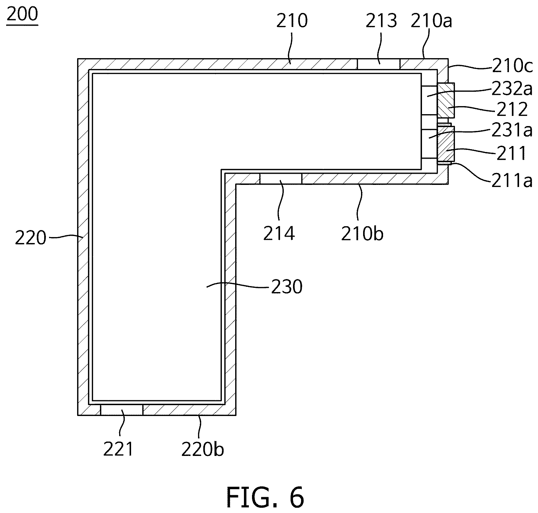

FIGS. 5 and 6 are cross-sectional views showing examples of secondary batteries according to one embodiment of the present invention.

Referring to FIG. 5, a secondary battery 200 according to one embodiment of the present invention may include an electrode assembly 230, a case body having one open surface and accommodating the electrode assembly 230 and an electrolyte solution, and a case cover sealing the one open surface of the case body. The configuration of the electrode assembly 230 may be the same as the configuration of the electrode assembly 130 described above.

In some embodiments, the case body may include a first main body portion 210 extending in a first direction X, and a second main body portion 220 extending in a second direction Y that is perpendicular to the first direction X from one (a first) end of the first main body portion 210. As shown in FIG. 5, the case body may be formed in an L-shape as a whole.

The first main body portion 210 may include an electrode terminal that is arranged on a side surface 210c of the other (a second) end that is arranged in a direction perpendicular to the upper surface 210a, and is electrically connected to an electrode tab of the electrode assembly 230. In some embodiments, a first electrode terminal 211 and a second electrode terminal 212 may be spaced apart from each other on a side surface 210c of the other end of the first main body portion 210. The first electrode terminal 211 may be coupled and electrically connected to the first electrode tab 231a of the electrode assembly 230. The second electrode terminal 212 may be coupled and electrically connected to the second electrode tab 232a of the electrode assembly 230.

The first electrode terminal 211 or the second electrode terminal 212 may be arranged to be electrically insulated from the first main body portion 210. In some embodiments, when the first main body portion 210 functions as a negative electrode, and the first electrode terminal 211 functions as a positive electrode, an insulating member 211a may be further provided between the first electrode terminal 211 and the first main body portion 210. With this configuration, the first electrode terminal 211 may function as a positive electrode in a state that is insulated from the first main body portion 210, and the second electrode terminal 212 may function as a negative electrode in a state that is in contact with the first main body portion 210. The second electrode terminal 212 may also be arranged to be electrically insulated from the first main body portion 210.

The injection port 213 may be formed on the upper surface 210a of the first main body portion 210, and the discharge port 221 may be formed on the lower surface 220b facing the first main body portion 210, in the second main body portion 220. As an example, referring to FIG. 5, the injection port 213 may be formed on the right side of the upper surface 210a of the first main body portion 210, and the discharge port 221 may be formed on the left side of the lower surface 220b of the second main body portion 220.

With this configuration, the electrolyte solution injected into the injection port 213 may flow across from the upper right to the lower left of the first main body portion 210, and may flow across from the upper right to the lower left in the second main body portion 220.

Referring to FIG. 6, the first main body portion 210 may further include an auxiliary discharge port 214 formed diagonally across from the injection port 213 on a lower surface 210b opposite to the upper surface 210a. The auxiliary discharge port 214 may be formed closer to the injection port 213 than the discharge port 221 formed on the lower surface 220b of the second main body portion 220.

With this configuration, when the electrolyte solution is injected into the injection port 213, the electrolyte solution flows (e.g., primarily flows) to the auxiliary discharge port 214 to form an electrolyte solution flow path within the first main body portion 210. As the electrolyte solution flows to the discharge port 221, an electrolyte solution flow path may also be formed within the second main body portion 220. In some embodiments a larger amount of electrolyte solution flows to the auxiliary discharge port 214 than to the discharge port 221.

The auxiliary discharge port 214 may be opened (e.g., opened only) at the beginning of the process of injecting the electrolyte solution into the injection port 213 to supply the electrolyte solution, and when a certain amount or more (e.g., a threshold amount) of the electrolyte solution is injected, the auxiliary discharge port 214 may be closed, and the electrolyte solution supplied thereafter may flow into the discharge port 221. In some embodiments, the auxiliary discharge port 214 may be configured to close when about 40% of the total amount of electrolyte solution to be injected into the case body is supplied. In this regard, the threshold amount may be 40%. Depending on the size of the first main body portion 210 and the second main body portion 220, the timing of closing the auxiliary discharge port 214 during the electrolyte solution injection process may vary.

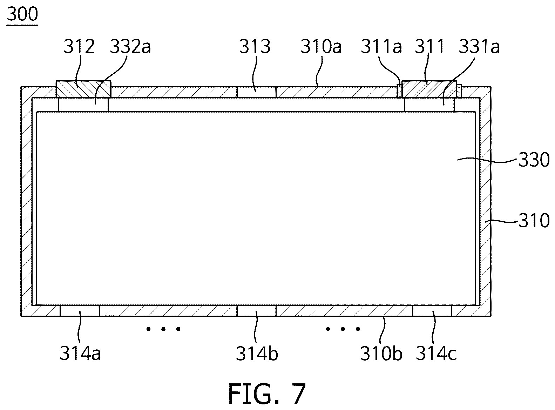

FIG. 7 is a cross-sectional view showing an example of a secondary battery according to one embodiment of the present invention.

Referring to FIG. 7, a secondary battery 300 according to one embodiment of the present invention may include an electrode assembly 330, a case body 310 having a first side surface that is open and accommodating the electrode assembly 330 and an electrolyte solution, and a case cover that seals the first side surface of the case body 310. The configuration of the electrode assembly 330 may be the same as the configuration of the electrode assembly 130 described above.

A first electrode terminal 311 and a second electrode terminal 312 may be spaced apart from each other on a second side surface 310a which is different from the first side surface of the case body 310. The first electrode terminal 311 may be coupled and electrically connected to the first electrode tab 331a of the electrode assembly 330. The second electrode terminal 312 may be coupled and electrically connected to the second electrode tab 332a of the electrode assembly 330.

The first electrode terminal 311 or the second electrode terminal 312 may be positioned to be electrically insulated from the case body 310. In some embodiments, when the case body 310 functions as a negative electrode, and the first electrode terminal 311 functions as a positive electrode, an insulating member 311a may be further provided between the first electrode terminal 311 and the case body 310. With this configuration, the first electrode terminal 311 may function as a positive electrode while insulated from the case body 310, and the second electrode terminal 312 may function as a negative electrode while in contact with the case body 310. The second electrode terminal 312 may also be positioned to be electrically insulated from the case body 310.

The secondary battery 300 according to the embodiment of FIG. 7 may be formed such that the width of the case body 310 is larger than the width of the case body 110 of the secondary battery 100 according to the embodiment of FIG. 1. In this case, in order to allow the electrolyte solution to be distributed (e.g., evenly) in the width direction, a plurality of discharge ports 314a, 314b, and 314c (collectively referenced as 314) may be formed so as to have a set distance from one another on the third side surface 310b facing the second side surface 310a of the case body 310. The injection port 313 may be formed in the central region between the first electrode terminal 311 and the second electrode terminal 312 so that the electrolyte solution may be supplied (e.g., evenly) in the width direction.

With this configuration, when the electrolyte solution is injected into the injection port 313, the electrolyte solution flows to the various discharge ports 314 on the third side surface 310b of the case body 310 and spreads or disperses in the width direction in the case body 310, so that the electrolyte solution may be supplied (e.g., uniformly) to the electrode assembly 330.

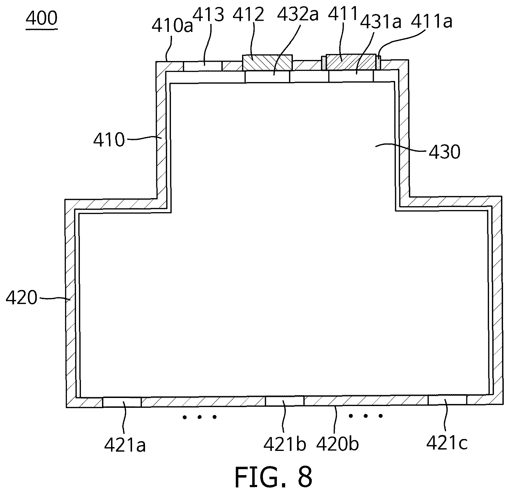

FIG. 8 is a cross-sectional view showing an example of a secondary battery according to one embodiment of the present invention.

Referring to FIG. 8, a secondary battery 400 according to one embodiment of the present invention may include an electrode assembly 430, a case body having one open surface and accommodating the electrode assembly 430 and an electrolyte solution, and a case cover sealing one open surface of the case body. The configuration of the electrode assembly 430 may be the same as the configuration of the electrode assembly 130 described above.

In some embodiments, the case body may include a first main body portion 410 and a second main body portion 420 formed to extend in the width direction from a lower surface of the first main body portion 410. The width of the second main body portion 420 is formed to be larger than the width of the first main body portion 410, and the first main body portion 410 may be formed in the upper central region of the second main body portion 420.

A first electrode terminal 411 and a second electrode terminal 412 may be spaced apart from each other on the upper surface 410a of the first main body portion 410. The first electrode terminal 411 may be coupled and electrically connected to the first electrode tab 431a of the electrode assembly 430. The second electrode terminal 412 may be electrically connected to the second electrode tab 432a of the electrode assembly 430.

The first electrode terminal 411 or the second electrode terminal 412 may be arranged to be electrically insulated from the first main body portion 410. In some embodiments, when the first main body portion 410 functions as a negative electrode and the first electrode terminal 411 functions as a positive electrode, an insulating member 411a may be further provided between the first electrode terminal 411 and the first main body portion 410. With this configuration, the first electrode terminal 411 may function as a positive electrode while insulated from the first main body portion 410, and the second electrode terminal 412 may function as a negative electrode while in contact with the first main body portion 410. The second electrode terminal 412 may also be arranged to be electrically insulated from the first main body portion 410.

Because the secondary battery 400 according to the fourth embodiment is formed so that the width of the second main body portion 420 is larger than the width of the first main body portion 410, discharge ports 421a, 421b, and 421c (collectively referenced as 421) formed on the lower surface 420b of the second main body portion 420 may be formed so as to have a set distance from one another.

The injection port 413 may be formed on the upper surface 410a of the first main body portion 410. As an example, referring to FIG. 8, a first electrode terminal 411 may be arranged on the right side of the upper surface 410a of the first main body portion 410, an injection port 413 may be formed on the left side, and a second electrode terminal 412 may be arranged between the first electrode terminal 411 and the injection port 413. In some embodiments, the injection port 413 may be formed in the central region of the upper surface 410a between the first electrode terminal 411 and the second electrode terminal 412.

With this configuration, when the electrolyte solution is injected into the injection port 413, the electrolyte solution may be supplied (e.g., uniformly) to the electrode assembly 430 while flowing to the various discharge ports 421 formed on the lower surface 420b of the second main body portion 420 and spreading or dispersing in the width direction in the first main body portion 410 and the second main body portion 420.

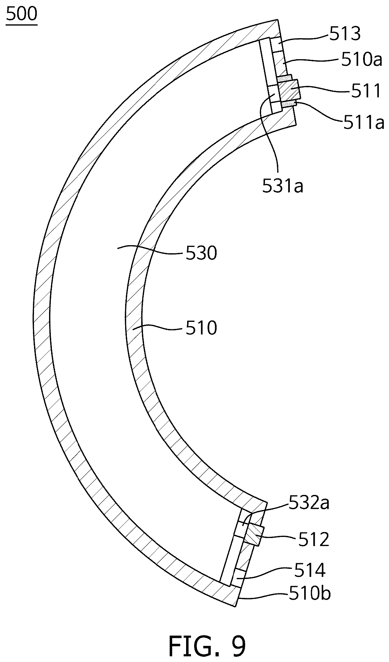

FIG. 9 is a cross-sectional view showing an example of a secondary battery according to one embodiment of the present invention.

Referring to FIG. 9, a secondary battery 500 according to one embodiment of the present invention may include an electrode assembly 530, a case body 510 having one open surface and accommodating the electrode assembly 530 and an electrolyte solution, and a case cover that seals one open surface of the case body 510. The configuration of the electrode assembly 530 may be the same as the electrode assembly 530 described above.

In some embodiments, the case body 510 may be formed in an arc shape (or C-shape) with a curved side surface. A first electrode terminal 511 may be arranged on an upper surface 510a of one end of the case body 510, and a second electrode terminal 512 may be arranged on a lower surface 510b of the other end of the case body 510. In some embodiments, both the first electrode terminal 511 and the second electrode terminal 512 may be arranged on the upper surface 510a of one end of the case body 510, or both the first electrode terminal and the second electrode terminal may be arranged on the lower surface 510b of the other end of the case body 510.

An injection port 513 may be formed on the upper surface 510a of one end of the case body 510, and a discharge port 514 may be formed on the lower surface 510b of the other end of the case body 510. With this configuration, when the electrolyte solution is injected into the injection port 513, the electrolyte solution may flow along the case body 510 in the shape of an arc toward the discharge port 514 and be supplied (e.g., evenly) to the electrode assembly 530.

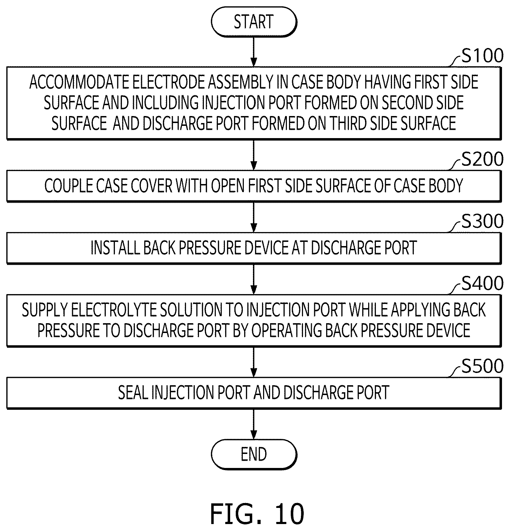

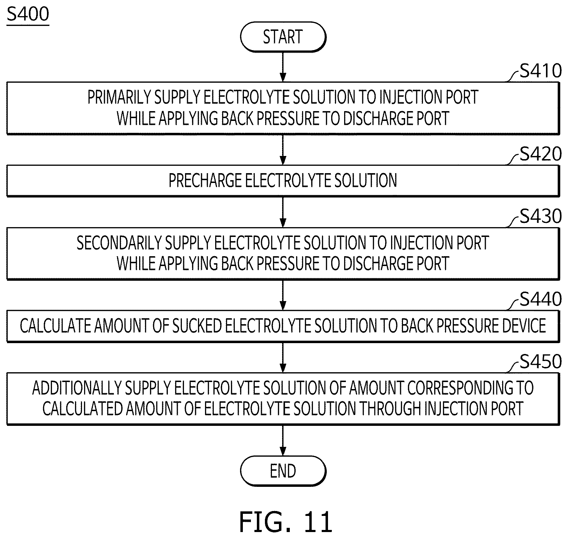

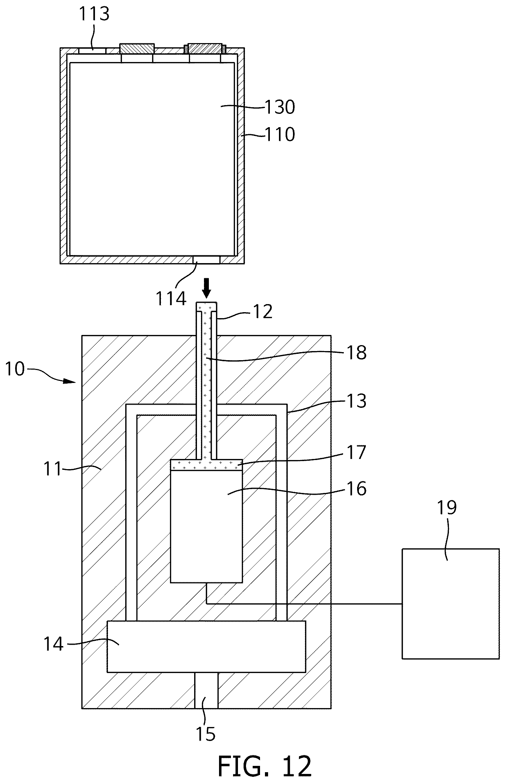

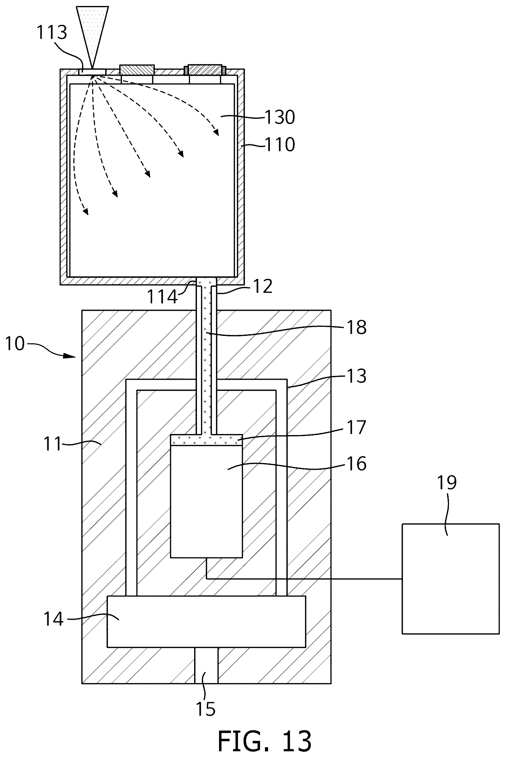

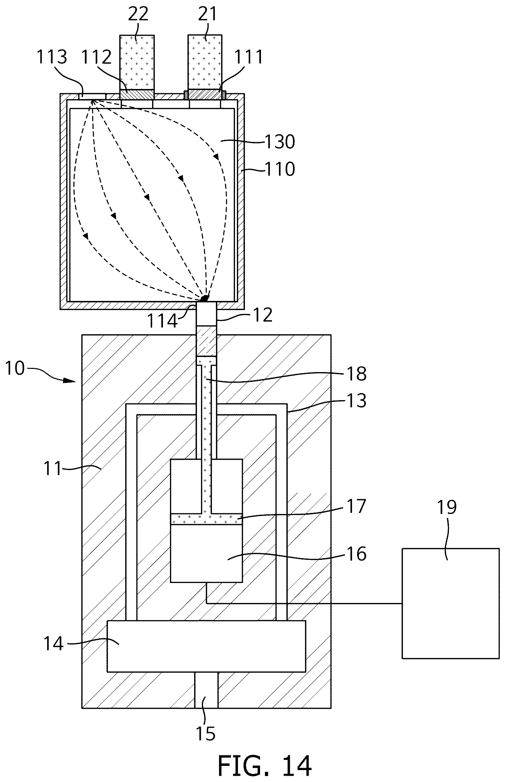

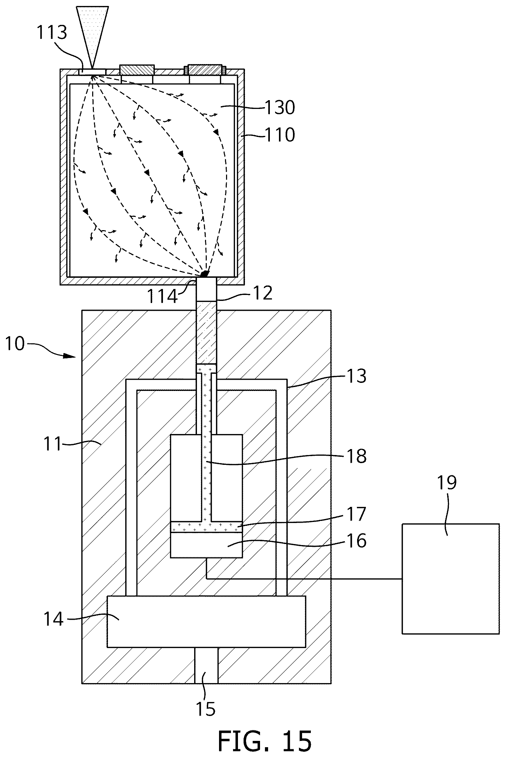

FIG. 10 is a flowchart showing an example of a method for manufacturing a secondary battery according to some embodiments of the present invention, and FIG. 11 is a flowchart showing an example of a step of supplying an electrolyte solution in a method for manufacturing a secondary battery according to some embodiments of the present invention. FIG. 12 is a cross-sectional view of a back pressure device being installed in a secondary battery in a method for manufacturing a secondary battery according to some embodiments of the present invention, FIG. 13 is a cross sectional view of a secondary battery being supplied with a first supply of an electrolyte solution in a method for manufacturing the secondary battery according to some embodiments of the present invention, FIG. 14 is a cross-sectional view of an electrode assembly being precharged in a method for manufacturing a secondary battery according to some embodiments of the present invention, and FIG. 15 is a cross sectional view of a secondary battery being supplied with a second supply of an electrolyte solution in a method for manufacturing the secondary battery according to some embodiments of the present invention.

Referring to FIGS. 10 to 15, a method for manufacturing a secondary battery according to some embodiments of the present invention may include a step S100 of putting an electrode assembly 130 in a case body 110, a step S200 of coupling a case cover to the case body 110, a step S300 of installing a back pressure device 10 in a discharge port 114 formed in the case body 110, a step S400 of supplying an electrolyte solution to an injection port 113 while operating the back pressure device 10 to apply back pressure to the discharge port 114, and a step S500 of sealing the injection port 113 and the discharge port 114.

The step S100 of putting the electrode assembly 130 in the case body 110 may be a step of putting the electrode assembly 130 in the case body 110 with the first side surface open. The case body 110 may have an injection port 113, into which electrolyte solution is injected, on a second side surface which is different from the first side surface, and a discharge port 114, which discharges at least a part of the electrolyte solution injected into the injection port 113 to the outside (e.g., outside of the case body), on a third side surface facing the second side surface.

In the step S200 of coupling a case cover to a case body 110, referring to FIG. 2, the case body 110 is provided with a flange portion 110c that extends outwardly along the perimeter of the first side surface, and after the case cover 120 is arranged on the flange portion 110c, the case body 110 and the case cover 120 may be coupled by welding along a welding line WL. After the case cover 120 is welded to the case body 110, the outer portion of the welding line WL may be cut and removed. The case body 110 and the case cover 120 may be formed of stainless use steel (SUS). In some embodiments, the case body 110 and the case cover 120 may be formed of a conductive metal such as aluminum, aluminum alloy, or nickel-plated steel.

The step S300 of installing a back pressure device 10 in the discharge port 114 may include a step of installing the back pressure device 10 in advance in the discharge port 114 so that back pressure may be applied to the discharge port 114 before injecting the electrolyte solution into the injection port 113 of the case body 110.

The back pressure device 10 may include a base frame 11, a coupling pipe 12, through which an end, which is arranged on the base frame 11 and protrudes outwardly from the base frame 11, is coupled to a discharge port 114 of a case body 110, a cylinder 16 connected to the coupling pipe 12, a piston 17 provided in the cylinder 16 and configured to slide, a rod 18 inserted into the coupling pipe 12 and coupled to the piston 17 to move together, and a driving unit 19 connected to the cylinder 16 and configured to move the piston 17. The driving unit 19 may be configured to supply gas to the cylinder 16 or exhaust the gas to move the piston 17. In some embodiments, a linear actuator may be provided in the cylinder 16 to move the rod 18.

With this configuration, when the driving unit 19 operates to move the piston 17 downward and move the rod 18, back pressure is applied to the inside of the coupling pipe 12, and back pressure may be applied to the discharge port 114.

The step S400 of supplying the electrolyte solution may include a step S410 of first supplying the electrolyte solution to the injection port 113 while operating the back pressure device 10 to apply back pressure to the discharge port 114, and a step S430 of secondarily supplying the electrolyte solution to the injection port 113 while applying back pressure to the discharge port 114 after a certain period of time. If a large amount of electrolyte solution is injected simultaneously through the injection port 113, the electrolyte solution may flow back or scatter, so the electrolyte solution may be supplied in primary and secondary stages. As an example, in the step of first supplying the electrolyte solution S410, about 60 to 70% of the total electrolyte solution to be injected may be injected, and in the step of second supplying the electrolyte solution S430, about 30 to 40% of the total electrolyte solution to be injected may be injected.

The step S400 of supplying the electrolyte solution may further include a step S420 of pre-charging the electrode assembly 130 after the step S410 of first supplying the electrolyte solution S410. Referring to FIG. 14, a first external terminal 21 and a second external terminal 22 are connected to the first electrode terminal 111 and the second electrode terminal 112 provided in the case body 110, respectively, and power is supplied to precharge the electrode assembly 130. The electrode assembly 130 may be activated through precharging to ensure sufficient contact between the electrode and the electrolyte solution.

The step S420 of precharging the electrode assembly 130 is not limited to being performed after the step S410 of primarily supplying the electrolyte solution, and may be performed after the step S430 of secondarily supplying the electrolyte solution. In some embodiments, the electrode assembly 130 may be primarily precharged after the step S410 of primarily supplying the electrolyte solution, and the electrode assembly 130 may be primarily precharged after the step S430 of secondarily supplying the electrolyte solution.

The step of supplying the electrolyte solution (S400) may further include a step of discharging gas generated inside the case body 110 to the outside after the step S420 of precharging the electrode assembly 130. Because gas is generated during the process of precharging the electrode assembly 130, a step of removing gas remaining inside the case body 110 before sealing the injection port 113 and the discharge port 114 may be included. In some embodiments, the gas remaining inside the case body 110 may be suctioned and removed. The method of removing gas is not limited to this example, and various known methods may be applied.

The step S400 of supplying the electrolyte solution may further include, a step S440 of calculating the amount of the electrolyte solution sucked into the back pressure device 10 after the step S430 of supplying the electrolyte solution secondarily, and a step S450 of additionally supplying the electrolyte solution of an amount corresponding to the calculated amount of electrolyte solution through the injection port 113. When back pressure is applied to the discharge port 114 of the case body 110 by the back pressure device 10, a part of the electrolyte solution may be sucked into the back pressure device 10. Because the total amount of electrolyte solution to be filled in the case body 110 is insufficient by the amount of electrolyte solution sucked into the back pressure device 10, a step for replenishing the insufficiency or insufficient amount may be additionally included.

Referring to FIG. 15, during the process of injecting electrolyte solution into the case body 110 through the injection port 113, a part of the electrolyte solution may be discharged through the coupling pipe 12 connected to the discharge port 114 of the case body 110. The amount of electrolyte solution discharged into the coupling pipe 12 may be calculated, and the amount of electrolyte solution calculated may be replenished through the injection port 113. In some embodiments, the height of the electrolyte solution discharged into the coupling pipe 12, and the diameter of the coupling pipe 12 are measured, and the volume of the electrolyte solution discharged into the coupling pipe 12 is calculated from the measured results, thereby calculating the amount of electrolyte solution to be replenished. An electronic scale may be installed in the back pressure device 10, and the weight of the electrolyte solution discharged into the coupling pipe 12 may be measured to calculate the amount of electrolyte solution to be replenished. The method for calculating the amount of electrolyte solution to be replenished is not limited to this example, and various known measurement methods may be applied.

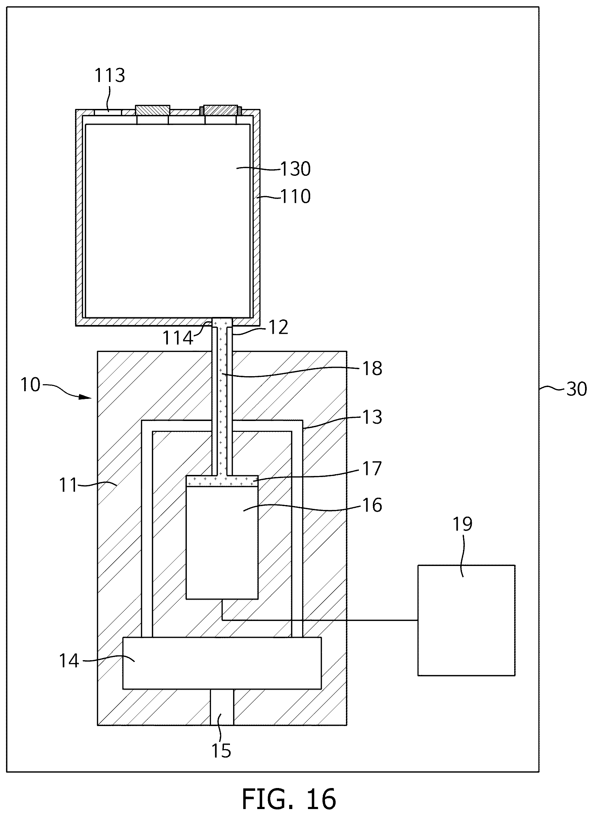

FIG. 16 is a cross-sectional view of a secondary battery and a back pressure device arranged in a chamber in a method for manufacturing a secondary battery according to some embodiments of the present invention.

Referring to FIG. 16, in some embodiments, the back pressure device 10 is arranged inside the chamber 30, and the discharge port 114 of the case body 110 may be coupled to the back pressure device 10 inside the chamber 30. The interior of the chamber 30 may be vacuum-evacuated before the step of supplying the electrolyte solution. After the interior of the chamber 30 becomes vacuum, the electrolyte solution is supplied to the injection port 113 of the case body 110, and the vacuum inside the chamber 30 may be broken. As the vacuum inside the chamber 30 is broken, the pressure inside the chamber 30 increases, and as the pressure inside the chamber 30 is applied to the injection port 113, the electrolyte solution may be more easily injected and diffused into the case body 110. When the vacuum inside the chamber 30 is broken, the back pressure device 10 connected to the discharge port 114 may be operated to apply back pressure to the discharge port 114 to provide pressure so that the electrolyte solution flows more quickly.

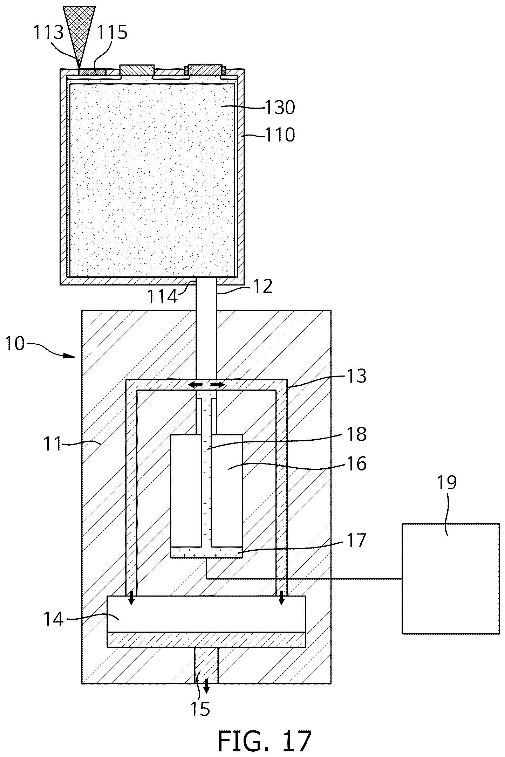

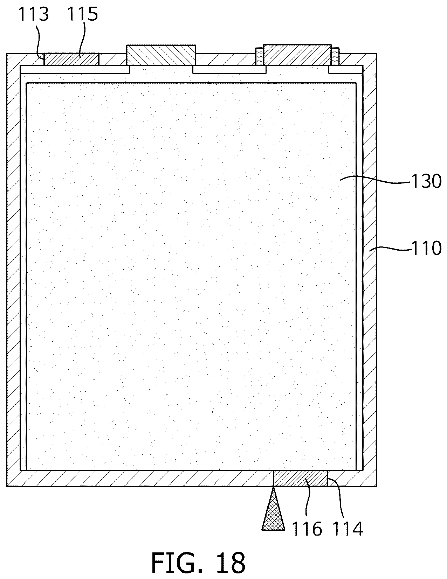

FIG. 17 is a cross-sectional view of an injection port receiving a first sealing member in a method for manufacturing a secondary battery according to some embodiments of the present invention, and FIG. 18 is a cross-sectional view of a discharge port receiving a second sealing member in a method for manufacturing a secondary battery according to some embodiments of the present invention.

Referring to FIGS. 17 and 18, the step of sealing the injection port 113 and the discharge port 114 may include a step of inserting and then joining a first sealing member 115 into the injection port 113, a step of separating the back pressure device 10 from the discharge port 114, and a step of inserting and then joining a second sealing member 116 into the discharge port 114.

As shown in FIG. 17, in a state that the back pressure device 10 has been connected to the discharge port 114, the first sealing member 115 is inserted into the injection port 113, and then the first sealing member 115 is joined to the injection port 113 through laser welding or the like to seal the injection port 113. The back pressure device 10 is separated from the discharge port 114, and as shown in FIG. 18, the second sealing member 116 is inserted into the discharge port 114, and then the second sealing member 116 is joined to the discharge port 114 through laser welding or the like to seal the discharge port 114.

Even if the back pressure device 10 is separated from the discharge port 114 after sealing the injection port 113, the electrolyte solution filled in the case body 110 may not be discharged through the discharge port 114 (or the discharge may be reduced) due to the pressure inside the case body 110 and the surface tension of the electrolyte solution. In this regard, the size of the discharge port 114 may be formed to be equal to or less than a certain size. In some embodiments, the discharge port 114 may be formed with a diameter of 3.0 mm or less. The diameter of the discharge port 114 is not limited to this example, and may vary depending on the size of the case body 110, the thickness of the case body 110, the type of electrolyte solution, the amount of electrolyte solution filled in the case body 110, etc.

The back pressure device 10 is provided on the base frame 11, and may further include a storage tank 14 that is connected to the coupling pipe 12 and discharges the electrolyte solution discharged into the coupling pipe 12, a connecting pipe 13 that connects the coupling pipe 12 with the storage tank 14, and a discharge pipe 15 that discharges the electrolyte solution stored in the storage tank 14 to the outside.

With this configuration, after the step of calculating the amount of electrolyte solution sucked into the back pressure device 10, the electrolyte solution stored in the coupling pipe 12 may be discharged to the storage tank 14. As an example, referring to FIG. 17, after calculating the amount of electrolyte solution stored in the coupling pipe 12, if the rod 18 is further moved downward, the coupling pipe 12 and the connecting pipe 13 may be connected, and the electrolyte solution stored in the coupling pipe 12 may be discharged to the storage tank 14 through the connecting pipe 13. In some embodiments, the electrolyte solution stored in the storage tank 14 may be discharged to the outside through the discharge pipe 15 provided in the storage tank 14 and recycled.

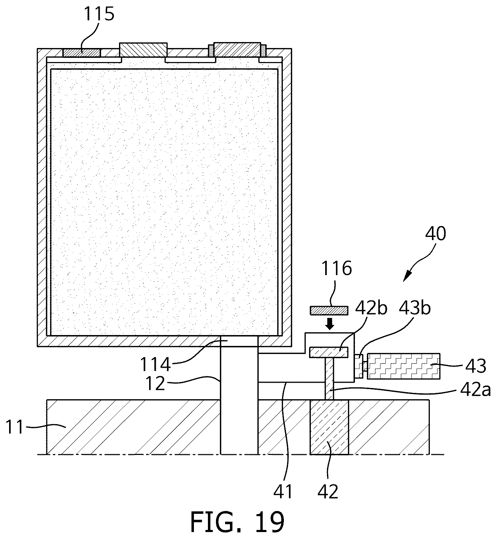

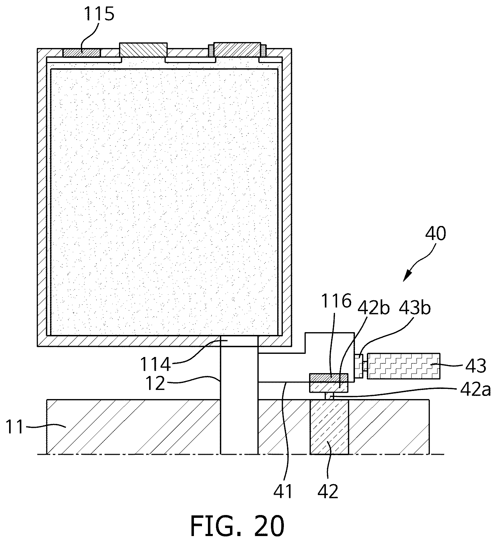

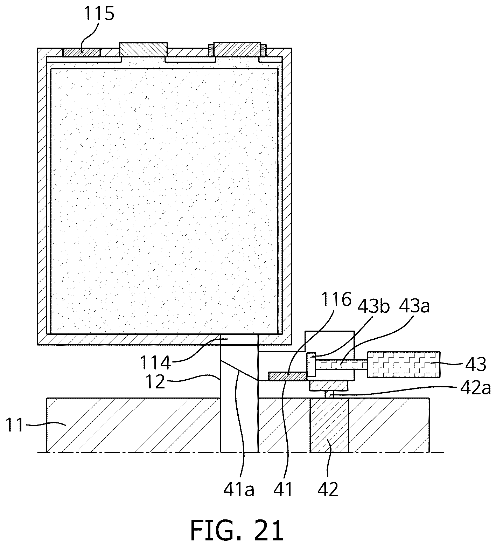

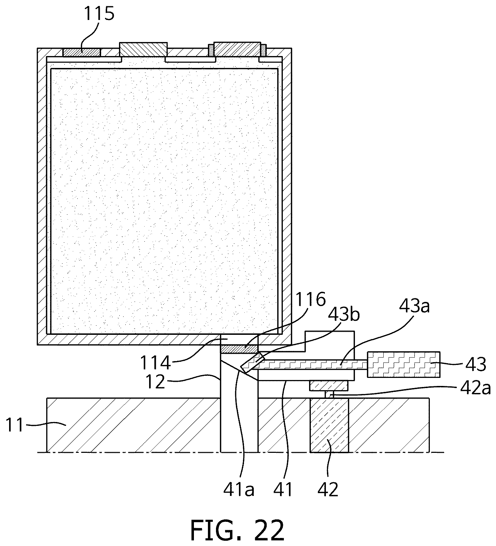

FIGS. 19 to 22 are cross-sectional views of a sealing member installation device for inserting a second sealing member into a discharge port in a method for manufacturing a secondary battery according to some embodiments of the present invention.

Referring to FIGS. 19 to 22, the step of sealing the injection port 113 and the discharge port 114 may include a step of inserting and then joining a first sealing member 115 into the injection port, a step of inserting a second sealing member 116 into the discharge port 114 through a sealing member installation device 40 equipped in the back pressure device 10, a step of separating the back pressure device 10 from the discharge port 114, and a step of joining the second sealing member 116 to the discharge port 114.

The step of inserting and then joining the first sealing member 115 into the injection port may be performed by inserting the first sealing member 115 into the injection port and then joining the first sealing member 115 to the injection port through laser welding or the like to seal the injection port.

The step of inserting the second sealing member 116 into the discharge port 114 may be performed by inserting the second sealing member 116 into the discharge port 114 through the sealing member installation device 40 provided in the back pressure device 10. Before separating the discharge port 114 from the back pressure device 10, the second sealing member 116 may be inserted into the discharge port 114 and then the discharge port 114 may be separated from the back pressure device 10.

In some embodiments, the sealing member installation device 40 may include a supply pipe 41 connected to a coupling pipe 12, a vertical support member 42b which is provided on the supply pipe 41 and on which a second sealing member 116 is mounted, a vertical actuator 42 provided with a vertical rod 42a for vertically moving the vertical support member 42b, a push member 43b which is provided on the supply pipe 41 and horizontally moves the second sealing member 116, and a horizontal actuator 43 provided with a horizontal rod 43a for horizontally moving the push member 43b.

With this configuration, when the second sealing member 116 is inserted into the supply pipe 41, the second sealing member 116 is seated on the vertical rod 42a, and the vertical actuator 42 operates to move the second sealing member 116 toward the inside of the supply pipe 41. The horizontal actuator 43 operates so that the push member 43b may pressurize the second sealing member 116 in the horizontal direction to be moved toward the coupling pipe 12. A door portion 41a is provided at the end of the supply pipe 41, and the door portion 41a may be opened at an angle toward the inside of the coupling pipe 12. When the push member 43b continues to move the second sealing member 116 in the horizontal direction, the second sealing member 116 moves upward along the door portion 41a, and when the push member 43b rotates at the end of the horizontal rod 43a, the second sealing member 116 is pressed toward the discharge port 114, so that the second sealing member 116 may be inserted into the discharge port 114.

The configuration of inserting the second sealing member 116 into the discharge port 114 through the sealing member installation device 40 corresponds to some embodiments, and any device and method may be applied as long as the second sealing member 116 may be inserted into the discharge port 114 without separating the discharge port 114 from the back pressure device 10.

In some embodiments, after the second sealing member 116 is inserted into the discharge port 114, the back pressure device 10 is separated from the discharge port 114, and the second sealing member 116 is joined to the discharge port 114 through laser welding or the like to seal the discharge port 114.

Although the present invention has been described with reference to embodiments and drawings illustrating aspects thereof, the present invention is not limited thereto. Various modifications and variations can be made by a person skilled in the art to which the present invention belongs within the scope of the technical spirit of the present invention and the claims and their equivalents, below.

### Description of Symbols

10 : back pressure device
21 : first external terminal
22 : second external terminal
30 : chamber
40 : sealing member installation device
100, 200, 300, 400, 500 : secondary battery
110, 310, 510 : case body
111, 211, 311, 411, 5100 : first electrode terminal
112, 212, 312, 412, 512 : second electrode terminal
113, 213, 313, 413, 513 : injection port
114, 221 : discharge port
115 : first sealing member
116 : second sealing member
120 : case cover
130, 230, 330, 430, 530 : electrode assembly
131a, 231a, 331a, 431a : first electrode tab
132a, 232a, 332a, 432a : second electrode tab

## Claims

1. A secondary battery (100, 200, 300, 400, 500) comprising:
an electrode assembly (130, 230, 330, 430, 530);
a case body (110, 310, 510) having an open first side surface accommodating the electrode assembly (130, 230, 330, 430, 530) and an electrolyte solution; and
a case cover (120) attached to the first side surface of the case body (110, 310, 510),
wherein the case body (110, 310, 510) includes:
an injection port (113, 213, 313, 413, 513) on a second side surface (110a, 310a) different from the first side surface for receiving the electrolyte solution; and
a discharge port (114, 221, 314) on a third side surface (110b, 310b) opposite to the second side surface (110a, 310a) configured to discharge at least a part of the electrolyte solution injected into the injection port (113, 213, 313, 413, 513).

2. The secondary battery (100, 200, 300, 400, 500) as claimed in claim 1, wherein the discharge port (114, 221, 314) is in the case body (110, 310, 510) in a diagonal direction from the injection port (113, 213, 313, 413, 513), with the electrode assembly (130, 230, 330, 430, 530) interposed therebetween.

3. The secondary battery (100, 200, 300, 400, 500) as claimed in claim 1 or 2, further comprising an electrode terminal (111, 112, 211, 212, 311, 312, 411, 412, 511, 512) on the second side surface (110a, 310a) and electrically connected to an electrode tab of the electrode assembly (130, 230, 330, 430, 530).

4. The secondary battery (100, 200, 300, 400, 500) as claimed in any one of claims 1 to 3, further comprising:
a first electrode terminal (111, 211, 311, 411, 511) on the second side surface (110a, 310a) and electrically connected to a first electrode tab (131a, 231a, 331a, 431a) of the electrode assembly (130, 230, 330, 430, 530); and
a second electrode terminal (112, 212, 312, 412, 512) arranged between the first electrode terminal (111, 211, 311, 411, 511) and the injection port (113, 213, 313, 413, 513) on the second side surface (110a, 310a) and electrically connected to a second electrode tab (132a, 232a, 332a, 432a) of the electrode assembly (130, 230, 330, 430, 530).

5. The secondary battery (100, 200, 300, 400, 500) as claimed in any one of the preceding claims, further comprising:
a first electrode terminal (111, 211, 311, 411, 511) on the second side surface (110a, 310a) and electrically connected to a first electrode tab (131a, 231a, 331a, 431a) of the electrode assembly (130, 230, 330, 430, 530); and
a second electrode terminal (112, 212, 312, 412, 512) on the second side surface (110a, 310a) and electrically connected to a second electrode tab (132a, 232a, 332a, 432a) of the electrode assembly (130, 230, 330, 430, 530),
wherein the injection port (113, 213, 313, 413, 513) is formed between the first electrode terminal (111, 211, 311, 411, 511) and the second electrode terminal (112, 212, 312, 412, 512).

6. The secondary battery (100, 200, 300, 400, 500) as claimed in any one of the preceding claims, wherein the discharge port (314) includes a plurality of discharge ports (314a, 314b, 314c) spaced apart from the third side surface (310b, 310b) by a set distance.

7. The secondary battery (100, 200, 300, 400, 500) as claimed in any one of the preceding claims, further comprising:
a first sealing member (115) configured to seal the injection port (113, 213, 313, 413, 513); and
a second sealing member (116) configured to seal the discharge port (114, 221).

8. The secondary battery (100, 200, 300, 400, 500) as claimed in any one of the preceding claims, wherein the case body (110, 310, 510) includes:
a first main body portion (210, 410) extending in a first direction (X); and
a second main body portion (220, 420) extending in a second direction (Y) perpendicular to the first direction (X) from a first end of the first main body portion (210, 410),
wherein the injection port (113, 213, 313, 413, 513) is on an upper surface (210a, 410a) of the first main body portion (210, 410), and
wherein the discharge port (114, 221) is on a lower surface (220b, 420b) of the second main body portion (220, 420) which faces the first main body portion (210, 410).

9. The secondary battery (100, 200, 300, 400, 500) as claimed in claim 8, further comprising:
an electrode terminal (111, 112, 211, 212, 311, 312, 411, 412, 511, 512) on a side surface (210c) of a second end arranged in a direction perpendicular to the upper surface (210a, 410a) of the first main body portion (210, 410), and electrically connected to an electrode tab (131a, 132a, 231a, 232a, 331a, 332a, 431a, 432a) of the electrode assembly (130, 230, 330, 430, 530).

10. The secondary battery (100, 200, 300, 400, 500) as claimed in claim 8 or 9, wherein the first main body portion (210, 410) further includes:
an auxiliary discharge port (214) formed diagonally from the injection port (113, 213, 313, 413, 513) on the lower surface (210b) opposite to the upper surface (210a, 410a).

11. The secondary battery (100, 200, 300, 400, 500) as claimed in any one of the preceding claims, wherein the case body (110, 310, 510) includes:
a first main body portion (210, 410); and
a second main body portion (220, 420) extended in a width direction from the lower portion of the first main body portion (210, 410),
wherein the injection port (113, 213, 313, 413, 513) is on an upper surface (210a, 410a) of the first main body portion (210, 410), and
wherein the discharge port (421a, 421b, 421c) is on a lower surface (220b, 420b) of the second main body portion (220, 420).

12. The secondary battery (100, 200, 300, 400, 500) as claimed in any one of the preceding claims, wherein the case body (110, 310, 510) is in a shape of an arc with a curved side surface,
wherein the injection port (113, 213, 313, 413, 513) is on an upper surface (510a) of a first end of the case body (110, 310, 510), and
wherein the discharge port (114, 221, 514) is on a lower surface (510b) of a second end of the case body (110, 310, 510).

13. A method for manufacturing a secondary battery (100, 200, 300, 400, 500, the method comprising:
accommodating an electrode assembly (130, 230, 330, 430, 530) in a case body (110, 310, 510) including an open first side surface, an injection port (113, 213, 313, 413, 513) on a second side surface (110a, 310a) that is different from the first side surface, and a discharge port (114, 221) on a third side surface (110b, 310b) opposite to the second side surface (110a, 310a);
coupling a case cover (120) with the first side surface of the case body (110, 310, 510);
installing a back pressure device (10) at the discharge port (114, 221);
supplying an electrolyte solution to the injection port (113, 213, 313, 413, 513) with back pressure applied to the discharge port (114, 221) via the back pressure device (10); and
sealing the injection port (113, 213, 313, 413, 513) and the discharge port (114, 221).

14. The method as claimed in claim 13, wherein the sealing of the injection port (113, 213, 313, 413, 513) and the discharge port (114, 221) includes:
inserting and coupling a first sealing member (115) to the injection port (113, 213, 313, 413, 513);
separating the back pressure device (10) from the discharge port (114, 221); and
inserting and coupling a second sealing member (116) to the discharge port (114, 221).

15. The method as claimed in claim 13 or 14, wherein the sealing of the injection port (113, 213, 313, 413, 513) and the discharge port (114, 221) includes:
inserting and coupling a first sealing member (115) to the injection port (113, 213, 313, 413, 513);
inserting a second sealing member (116) into the discharge port (114, 221) through a sealing member installation device (40) equipped in the back pressure device (10);
separating the back pressure device (10) from the discharge port (114, 221); and
coupling the second sealing member (116) to the discharge port (114, 221).
